# FASCICULE DE BREVET EUROPEEN

(11) **EP 2 633 538 B1**
(45) Date de publication et mention de la délivrance du brevet: **20.05.2015**
(21) Numéro de dépôt: 11775801.1
(22) Date de dépôt: 26.10.2011
(51) Int. Cl.: H01H 33/70

(54) **APPAREILLAGE ELECTRIQUE SOUS ENVELOPPE METALLIQUE COMPORTANT AU MOINS UN CAPOT PARE-EFFLUVE ASSURANT DES ECHANGES CONVECTIFS**
ELEKTRISCHE VORRICHTUNG IN EINEM METALLGEHÄUSE, BESAGTE VORRICHTUNG MIT MINDESTENS EINER ABSCHIRMHAUBE ZUR SICHERSTELLUNG VON KONVEKTIVEM AUSTAUSCH
ELECTRICAL APPARATUS IN A METAL CASE SAID APPARATUS COMPRISING AT LEAST ONE CORONA-SHIELD CAP ENSURING CONVECTIVE EXCHANGE

(30) Priorité: 27.10.2010 FR 1058839
(43) Date de publication de la demande: 04.09.2013
(73) Titulaire: ALSTOM Technology Ltd, 5400 Baden (CH)
(72) Inventeur: FNINECHE, Chakib, 38380 Saint-Pierre-d'Allevard (FR); RODRIGUEZ, Jean-Alain, 69003 Lyon (FR)
(74) Mandataire: Ilgart, Jean-Christophe
(86) Numéro de dépôt international: PCT/EP2011/068777
(87) Numéro de publication internationale: WO 2012/055923

(56) Documents cités:
- CH-A- 470 068
- DE-A1- 2 911 633
- US-A- 3 946 180

## Description

### DOMAINE TECHNIQUE ET ART ANTÉRIEUR

La présente invention se rapporte principalement à un appareillage électrique moyenne, haute ou très haute tension sous enveloppe métallique remplie d'un fluide diélectrique, type hexafluorure de soufre gazeux (SF₆), et plus particulièrement à des appareillages électriques sous enveloppe métallique munis de capots pare-effluves permettant de contrôler les gradients électriques.

L'enveloppe métallique des appareillages électriques sous enveloppe métallique, tels que les transformateurs de puissance ou de courant, les disjoncteurs blindés et les postes sous enveloppes métalliques, avec des pièces mobiles ou fixes, est reliée à la terre et a donc un potentiel égal à 0 V.

La partie conductrice de l'appareillage électrique se trouve à plusieurs centaines de kilovolts et est isolée de l'enveloppe extérieure par un fluide diélectrique, type gaz SF₆ ou liquide comme de l'huile.

Il existe donc des gradients de tension importants au sein de l'appareillage électrique. Plus particulièrement, au niveau des zones présentant une forme acérée ou plus généralement en pointe, il apparaît un effet de pointe, c'est-à-dire qu'au niveau de la pointe le champ électrique tend vers l'infini, ce qui va contribuer à l'ionisation du gaz et ainsi à l'amorçage d'un éventuel arc électrique.

Pour cela, il est connu de disposer autour des conducteurs haute ou moyenne tension au niveau des ces zones acérées des capots, appelés capots pare-effluves de forme cylindrique recouvrant ces zones pour éviter cet effet de pointe. Le capot est réalisé en métal et est à la tension de l'appareillage électrique.

Les capots pare-effluves recouvrent par exemple les mécanismes destinés à déplacer un contact mobile, ces mécanismes comprenant de bielles, ou tout élément formant une saillie risquant de provoquer un amorçage du fait du champ électrique important au niveau de cette saillie.

Ce capot pare-effluve entoure le conducteur haute ou moyenne tension, et se trouve à une distance donnée de celui-ci, cette distance dépendant de la nécessité de faire passer un outillage pour le montage ou la maintenance entre le capot pare-effluve et le conducteur haute ou moyenne tension et/ou la présence de bielles pour le déplacement d'une partie mobile.

Un appareillage électrique muni d'un tel capot est décrit dans le document EP2144263, le capot pare-effluve permet d'améliorer la répartition homogène du gradient de champ électrique et ainsi d'éviter les effets de pointe. Ce capot donne entière satisfaction.

Outre les contraintes diélectriques, un échauffement apparait dans les appareillages. Afin de limiter cet échauffement, il est souhaitable d'éviter de confiner le gaz diélectrique. Or, la présence des capots pare-effluves favorise ce confinement.

Le document "CH 470 068 A" décrit un appareillage électrique selon le préambule de la revendication 1.

C'est par conséquent un but de la présente invention d'offrir un capot pare-effluve améliorant la répartition homogène du gradient de champ électrique tout en évitant un confinement du gaz, afin d'offrir un appareillage électrique de fonctionnement sûr.

### EXPOSÉ DE L'INVENTION

Le but énoncé ci-dessus est atteint par un capot pare-effluve comportant un corps creux destiné à entourer un conducteur électrique, comportant au moins un passage traversant radialement le corps, ledit passage traversant étant réalisé dans le fond d'une dépression annulaire du capot.

En d'autres termes, on assure des échanges convectifs entre le gaz plus chaud situé dans le capot et le gaz moins chaud situé à l'extérieur du capot, tout en assurant une bonne tenue aux contraintes diélectriques du fait de l'implantation dudit au moins un passage dans un puits de potentiel.

La présence d'orifices dans le capot qui est généralement défavorable en termes de tenues diélectrique est compensée par sa disposition dans une dépression formant un puits de potentiel.

Le gradient de champ électrique sur le bord d'un orifice est notablement réduit grâce à l'invention, au moins divisé par 2 par rapport à un gradient de champ électrique sur le bord d'un orifice dans une zone de diamètre constant du capot.

De préférence, le capot comporte plusieurs orifices répartis angulairement dans au moins un plan perpendiculaire à l'axe longitudinal du capot.

De manière préférentielle, les bords de l'orifice présente un rayon de courbure ce qui permet de réduire encore le champ électrique sur les bords de l'orifice.

On entend, dans la présente demande, par dépression annulaire ou bossage annulaire un profil en creux ou en saillie respectivement sur la surface extérieure du capot, qui est fermé autour de l'axe longitudinal du capot, le capot ayant une forme tubulaire dont la section n'est pas de nécessaire circulaire et peut varier le long de son axe. Par conséquent, l'adjectif "annulaire" ne se rapporte pas exclusivement à une forme d'anneau circulaire mais à toute forme fermée.

La présente invention a alors pour objet un appareillage électrique sous enceinte métallique remplie de gaz diélectrique sous pression, comportant au moins un conducteur électrique d'axe longitudinal destiné à être sous tension, disposé à l'intérieur de l'enceinte, au moins un capot pare-effluve entourant au moins une portion longitudinale dudit conducteur, ledit capot pare-effluve comportant un corps conducteur électrique creux d'axe longitudinal sensiblement coaxial à l'axe de l'enceinte, ledit corps comportant au moins une dépression annulaire dans sa surface extérieure et au moins un orifice traversant ledit corps pour assurer la circulation du gaz diélectrique entre une zone intérieure et une zone extérieure au capot pare-effluve, ledit orifice étant réalisé dans un fond de ladite dépression annulaire.

Dans un exemple avantageux, le appareillage électrique comporte une pluralité d'orifices dans ledit fond de la dépression annulaire répartie autour de l'axe longitudinal. Plus particulièrement, il peut comporter trois orifices ou trois groupes d'orifices disposés à 120° l'un de l'autre autour de l'axe longitudinal.

Dans un exemple particulier, le conducteur est sensiblement horizontal et un orifice ou un groupe d'orifices est disposé dans une partie inférieure du capot pare-effluve et deux orifices ou deux groupes d'orifices sont disposés dans une partie supérieure du capot pare-effluve, avantageusement les deux orifices ou groupes d'orifices de la partie supérieure sont disposés symétriquement par rapport à un plan vertical contenant l'axe longitudinal.

Avantageusement, la dépression annulaire présente un rayon de courbure.

Selon une caractéristique de l'appareillage, le capot pare-effluve comporte une extrémité libre munie d'un bourrelet annulaire entourant le conducteur.

Selon une autre caractéristique de l'appareillage, le capot pare-effluve peut comporter deux bossages annulaires présentant chacun un rayon de courbure, disposés axialement de part et d'autre de la dépression annulaire, les flancs de la dépression annulaire étant formés pour l'un par un flanc d'un desdits bossage et pour l'autre par le flanc de l'autre desdits bossage.

Le corps du capot pare-effluve présente par exemple une épaisseur sensiblement constante sauf au niveau de son extrémité libre.

De préférence, les rayons de courbure des premier et deuxième bossages sont sensiblement égaux, la distance minimale entre le capot pare-effluve et l'enveloppe étant définie par le diamètre extérieur des bossages.

Le deuxième bossage et l'extrémité libre du capot forment avantageusement un profil continu.

De manière préférée, les bords des orifices présentent un profil convexe.

Le corps du capot pare-effluve a par exemple une section transversale circulaire.

Les orifices peuvent avoir par exemple une section de passage circulaire.

Dans un exemple de réalisation, le conducteur électrique comporte deux éléments de contact, au moins l'un des éléments de contact étant mobile le long d'un axe longitudinal, lesdits éléments de contact étant destinés à venir en contact, ledit capot pare-effluve entourant au moins partiellement ledit au moins un élément de contact mobile, et ledit poste comportant un deuxième capot pare-effluve entourant au moins partiellement le deuxième élément de contact.

### BRÈVE DESCRIPTION DES DESSINS

La présente invention sera mieux comprise à l'aide de la description qui va suivre et des dessins en annexe, sur lesquels :
- la figure 1A est une vue en coupe longitudinale schématique d'un exemple de réalisation d'un appareillage électrique selon la présente invention,
- la figure 1B est une vue schématique de l'appareillage de la figure 1A sur laquelle les dimensions sont précisées,
- les figures 2A et 2B sont des vues de l'intérieur et de l'extérieur respectivement du capot de l'exemple de la figure 1A,
- la figure 3A est une vue d'un détail schématique d'un capot au niveau d'un orifice,
- la figure 3B est une représentation schématique du bord de l'orifice de la figure 3A sur laquelle les gradients de champ électrique en surface sont représentés,
- les figures 4A à 4C sont des cartes de températures des différentes zones du capot, du conducteur et de l'appareillage électrique,
- les figures 5A à 5C sont des cartes de températures des différentes zones d'un capot sans orifice, du conducteur et de l'appareillage électrique muni d'un tel capot,
- les figures 6A et 6B sont des vues de côté et en coupe transversale le long d'un plan A-A d'un exemple de réalisation d'un capot,
- les figures 7A et 7B sont des vues de côté et en coupe transversale le long d'un plan B-B d'une variante préférée du capot des figures 6A et 6B,
- les figures 8A et 8B sont des vues de côté et en coupe transversale le long d'un plan C-C d'une variante préférée du capot,
- la figure 9 est une vue en perspective de dessus d'une variante préférée du capot des figures 8A et 8B,
- la figure 10 est une vue en coupe longitudinale d'un autre exemple de réalisation d'un capot pare-effluve,
- la figure 11 est une vue en coupe longitudinale d'un autre exemple de réalisation d'un capot pare-effluve.

### EXPOSÉ DÉTAILLÉ DE MODES DE RÉALISATION PARTICULIERS

La description qui va suivre va porter principalement sur un disjoncteur sous enveloppe métallique afin d'expliquer l'invention, et ceci à des fins de simplicité et de clarté, mais il est bien entendu que la présente invention s'applique à tout appareillage électrique moyenne, haute ou très haute tension sous enveloppe métallique.

La présente invention s'applique à tout appareillage électrique comportant une enveloppe externe ou cuve et des éléments internes sous tension, et pour lesquels il existe une différence de tension entre l'enveloppe externe et les éléments internes, les éléments sous tension étant entourés par un ou plusieurs capots pare-effluves.

Les appareillages électriques auxquels s'appliquent l'invention peuvent être des transformateurs de puissance, des transformateurs de courant, des appareillages électriques avec jeux de barres, avec ou sans pièces mobiles, et tout interrupteur destiné à interrompre un courant sous moyenne, haute ou très haute tension.

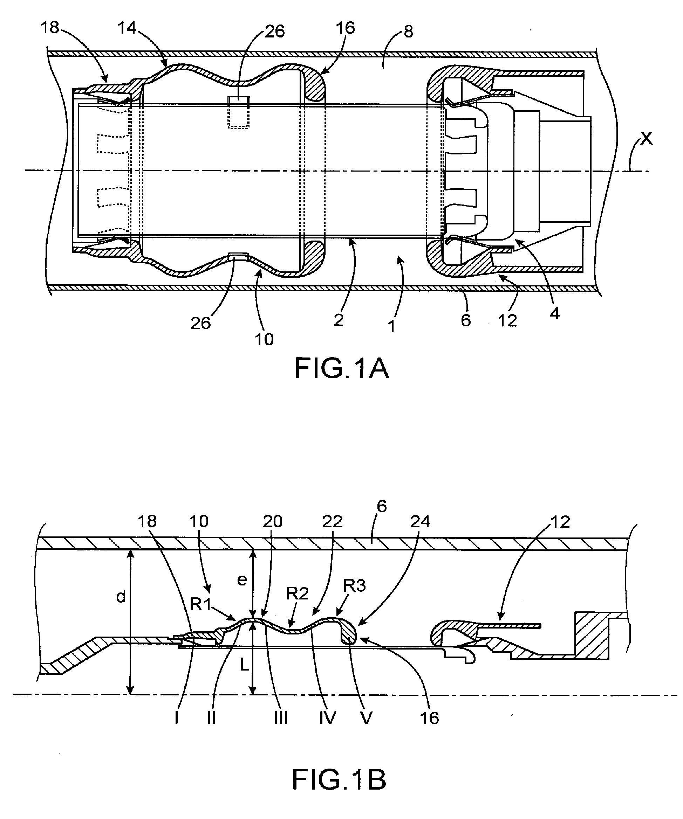

Sur la figure 1A, on peut voir une vue en coupe longitudinale d'un exemple de réalisation d'un disjoncteur selon la présente invention comportant un conducteur électrique 1 sous tension s'étendant selon un axe longitudinal X, une cuve métallique 6 confinant de manière étanche le conducteur électrique 1. Ce volume 8 est rempli d'un fluide isolant électrique. Ce fluide peut être gazeux, de manière courante il peut s'agir d'hexafluorure de soufre (SF₆) ou peut être liquide, par exemple de l'huile.

La cuve 6 est reliée à la masse, elle est donc à un potentiel nul.

Dans cet exemple, nous considérons que les différentes pièces décrites ont une forme de révolution autour de l'axe X, mais ceci n'est en aucun cas limitatif, et toute pièce ayant une autre forme entre dans le cadre de la présente invention.

Dans l'exemple représenté, le conducteur électrique 4 est destiné à conduire le courant électrique en fonctionnement normal et à l'interrompre en cas d'incident. Pour cela, il comporte deux éléments de contact 2, 4 aptes à être éloignés l'un de l'autre d'une distance suffisante. On prévoit qu'un des deux éléments 2, 4 soit mobile axialement afin de s'écarter de l'autre élément conducteur. Dans ce cas, il s'agit de l'élément de contact 2.

Le disjoncteur comporte également un premier 10 et un deuxième 12 capot pare-effluve. Les capots pare-effluves 10, 12 sont réalisés en matériau conducteur électrique, par exemple en métal. Le premier capot pare-effluve 10 entoure par exemple une partie du premier élément de contact 2 et le deuxième capot pare-effluve 12 entoure l'élément de contact fixe 4.

Dans l'exemple représenté, les capots pare-effluves 10, 12 ont des sections circulaires, mais cela n'est en aucun cas limitatif, on pourrait prévoir des capots à section prismatique polygonale, elliptique, ou même ne présentant pas d'axe de symétrie.

Nous considérons également que les capots 10, 12 sont électriquement reliés aux éléments de contact 2, 4, et donc se trouvent au même potentiel que les éléments de contact. Des capots pare-effluves au potentiel de l'enveloppe externe 6 entrent également dans le cadre de la présente invention.

Le premier 10 et le deuxième 12 capots pare-effluves entourent avec jeu les éléments de contact 2 et 4 respectivement, et s'étendent sur une partie au moins de la longueur des éléments de contact 2 et 4.

Dans l'exemple représenté, le disjoncteur comporte deux capots pare-effluves différents, le deuxième capot pare-effluve 12 présente un corps tubulaire de diamètre constant offrant un encombrement réduit adapté à la structure de l'appareillage. Mais un appareillage électrique comportant deux capots pare-effluves identiques ne sort pas du cadre de la présente invention.

Nous allons maintenant décrire en détail le capot pare-effluve 10.

Le capot pare-effluve 10 comporte un corps creux 14 s'étendant suivant un axe longitudinal X1. Le capot pare-effluve 10 comporte une première extrémité longitudinale 16 orientée en direction de l'élément de contact 4 et une deuxième extrémité longitudinale 18 orientée en éloignement de l'élément de contact 4.

Nous désignerons dans la suite de la description, l'extrémité longitudinale 16 du capot pare-effluve 10 orientée du côté d'une zone centrale du volume 8 par extrémité proximale, et l'extrémité longitudinale 18 orientée en éloignement de cette zone centrale, par extrémité distale.

L'élément de contact mobile 2 comporte une partie fixe 2.1 et une partie mobile 2.2 montée à coulissement dans la partie fixe 2.1 le long de l'axe X de l'appareillage. La partie mobile 2.2 assure le contact électrique entre la partie fixe 2.1 et l'élément de contact 4. La partie mobile 2.2 est connectée au mécanisme de commande du déplacement de l'élément de contact mobile 2.

L'extrémité distale 18 du capot 10 est montée de manière fixe sur la partie fixe 2.1 de l'élément de contact 2. Dans l'exemple représenté, la partie fixe 2.1 pénètre dans l'extrémité distale 18 du capot-pare-effluve 10. Ainsi, le capot pare-effluve 10 entoure majoritairement la partie mobile 2.2 du contact 2.

De manière schématique, le corps 14 du premier capot pare-effluve 10 comporte de son extrémité distale à son extrémité proximale, une première portion I en forme de manchon de diamètre sensiblement constant, une deuxième portion II dont la section transversale est diamètre croissant, une troisième portion III dont la section transversale est de diamètre décroissant et une quatrième portion IV dont la section transversale est de diamètre croissant et une cinquième portion V formant un anneau de diamètre intérieure sensiblement constant.

La portion I en forme de manchon est emboitée sur la partie fixe 2.1 de l'élément de contact 2.

Comme cela est schématisée sur la figure 1B, la zone de raccordement 20 entre les deuxième et troisième portions forme un bossage annulaire présentant un rayon de courbure R1, la zone de raccordement 22 entre les troisième et quatrième portions forme une dépression annulaire de rayon de courbure R2 et la zone de raccordement 24 entre la quatrième et la cinquième portion forme un bossage annulaire de rayon de courbure R.

On pourrait prévoir en variante que la dépression présente un fond formé par un cylindre à section circulaire.

L'extrémité proximale 16 du capot présente également un rayon de courbure R3 de sorte qu'elle forme avec le deuxième bossage un profil continu, afin d'éviter la présence de toute zone à angle vif susceptible de former une zone de concentration de contrainte diélectrique.

Soit d la distance entre le rayon intérieur de la cuve et l'axe longitudinal X de la cuve.

Soit L le plus grand rayon du capot pare-effluve.

Soit e tel que e = d - L, e étant la distance minimale entre la surface extérieur du capot et la surface intérieure de la cuve pour ne pas dépasser la valeur critique du champ électrique pouvant entraîner une non tenue diélectrique. Cette valeur de champ électrique, et donc celle de e, est fonction du facteur forme, du niveau de tension, de la nature du gaz et de la pression de ce dernier.

Le capot pare-effluve 10 comporte également dans le fond de la zone de dépression 22 au moins un orifice 26, dans l'exemple représenté plusieurs orifices 26, formant des passages traversant le capot et mettant en communication fluidique l'intérieur et l'extérieur du capot 10.

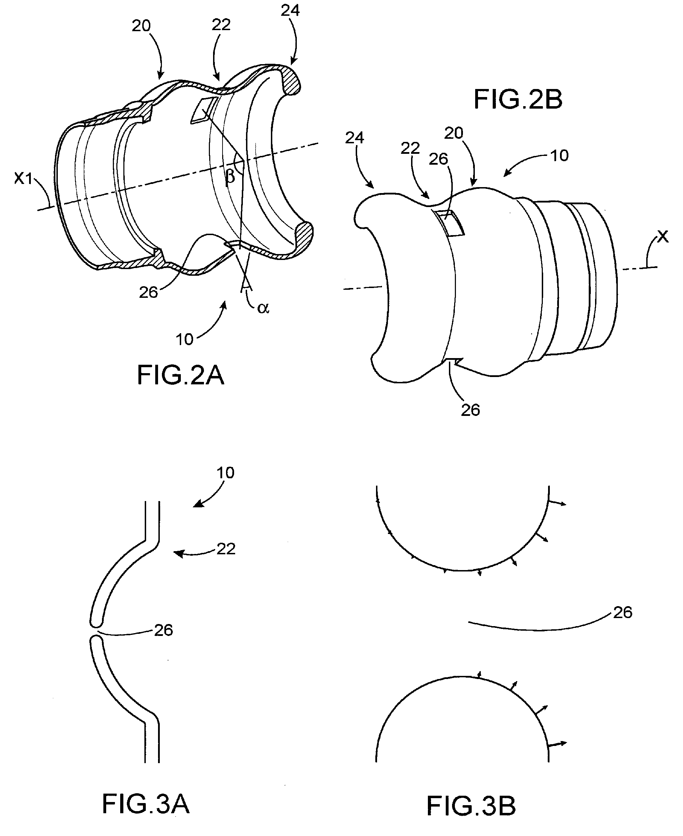

Dans l'exemple représenté sur les figures 1A, 2A et 2B, les orifices 26 sont de section rectangulaire repartis angulairement autour de l'axe X1, dont la largeur est parallèle à l'axe X1.

De manière avantageuse, les orifices sont répartis régulièrement autour de l'axe longitudinal X1, assurant des échanges convectifs à travers toute la périphérie du capot et tout autour du conducteur. Dans l'exemple représenté sur la figure 1A, les orifices sont au nombre de trois répartis à 120° l'un de l'autre autour de l'axe X1.

Cette répartition régulière n'est pas limitative et des capots avec des orifices répartis de manière non régulière entre dans la cadre de la présente invention.

Ces orifices 26 forment de passages traversant pour le gaz diélectrique, par exemple le SF6 assurant des échanges convectifs de gaz entre l'intérieur et l'extérieure du capot.

La disposition dans le fond de la dépression permet de réduire la contrainte diélectrique due à la présence des orifices dans le capot, en particulier due aux bords des orifices.

De manière particulièrement avantageuse, le capot, comportant trois orifices à 120° les uns des autres, est disposé dans l'enceinte de l'appareillage dont l'axe longitudinal est sensiblement horizontal, de telle sorte qu'un orifice soit disposé dans la partie inférieure du capot et les deux autres orifices soient disposés dans la partie supérieure symétriquement par rapport à un plan vertical contenant l'axe X. Le premier orifice situé dans la partie inférieure permet d'engendrer un effet dit Venturi. Il se traduit par une vitesse plus élevée du fluide au passage de cet orifice améliorant ainsi le flux de gaz. Une ouverture de section supérieure est prévue sur la partie supérieure. Dans l'exemple représenté, cette ouverture de section de passage supérieure est obtenue en réalisant une pluralité de trous, deux dans l'exemple, ayant chacune une section de passage égale à celle de l'orifice dans la partie inférieure. Cette réalisation est industriellement très avantageuse à fabriquer.

A titre d'exemple de réalisation uniquement, on peut choisir concernant la forme du capot:
R1 = R3
R1 ≥ R2
R1/10 ≤ R2 ≤ R1.

Concernant la taille des orifices :
Soit S la section d'une ouverture.
Soit n le nombre d'orifices tel que 3 ≤ n < 120.

Les n orifices sont répartis sur la circonférence de la dépression annulaire 22 avec un pas angulaire β (cf. figure 2A) tel que β= 2n/n.

Chaque section S est définie par le produit a × b tel que a = α×R2 (cf. figure 2A).

On a 0<R2<RMAX RMAX étant conditionné par la tenue diélectrique du capot et à des paramètres d'encombrement.

D'autre part, on a 0<α≤π.

Par exemple, en prenant : R2=10 mm et α=π/2, on obtient alors une valeur de a= α × R2 = π/2 × 10 = 15.7 mm

Avec b tel que 0<b<2n (L-R2)/n.

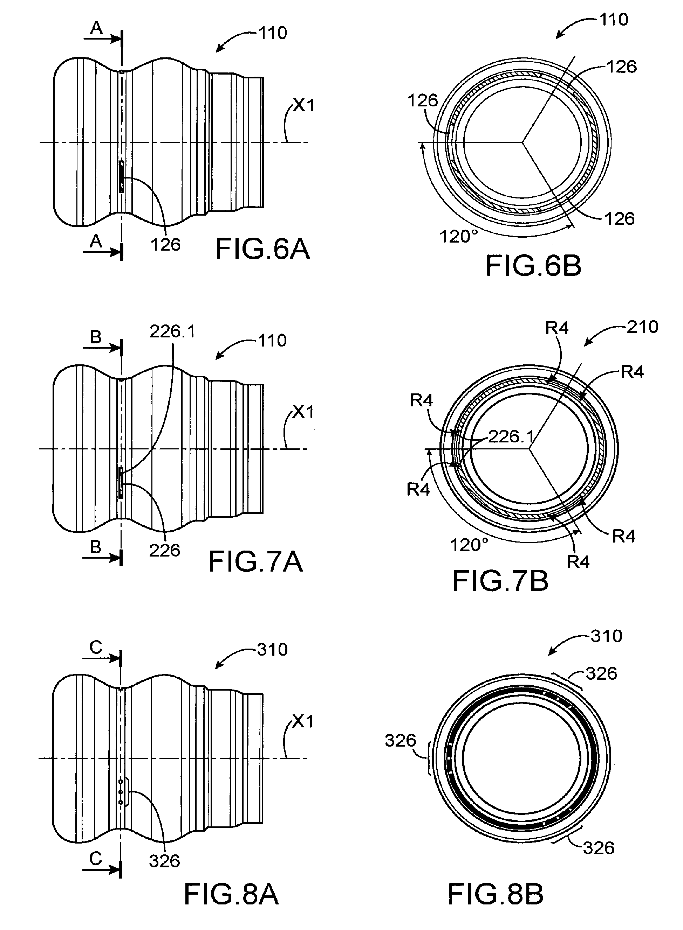

Sur les figures 6A et 6B, on peut voir un autre exemple de réalisation d'un capot 110, dans lequel les orifices 126 présentent une section rectangulaire de largeur très faible par rapport à sa longueur, par exemple sa longueur est de 40,1 mm tandis que sa largeur est de 5 mm. Les orifices 126 sont réparties à 120° l'un de l'autre. Dans cet exemple de réalisation, les bords des orifices présentent des angles vifs.

Sur les figures 7A et 7B, on peut voir un autre exemple de réalisation avantageux d'un capot, dans lequel les orifices 226 présentent des bords 226.1 arrondis de sorte à limiter encore davantage les contraintes diélectriques au niveau des bords des orifices. Les bords 226.1 présentent donc un rayon de courbure délimitant un profil convexe.

Sur les figures 8A et 8B, on peut voir un autre exemple de réalisation d'un capot 310, dans lequel les orifices 326 ont des sections de passage circulaire. Dans cet exemple, le capot 310 comporte trois groupes de trois orifices 326, les groupes étant répartis à 120° les uns des autres autour de l'axe X1.

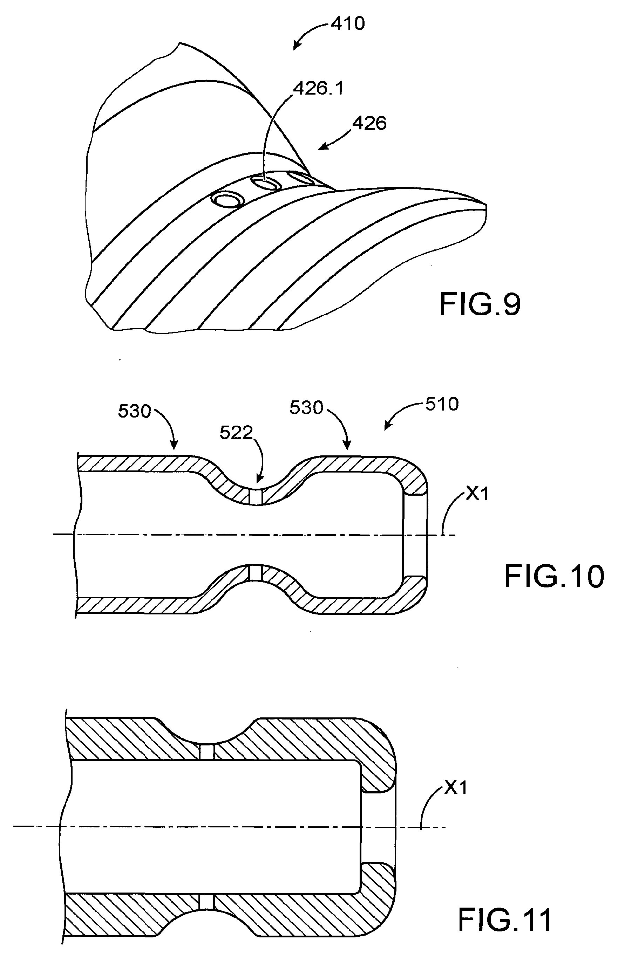

Sur la figure 9, on peut voir une variante avantageuse du capot 410 des figures 8A et 8B dans lequel les bords des orifices 426 sont arrondis de sorte à supprimer les angles vifs des bords et réduire les contraintes diélectriques.

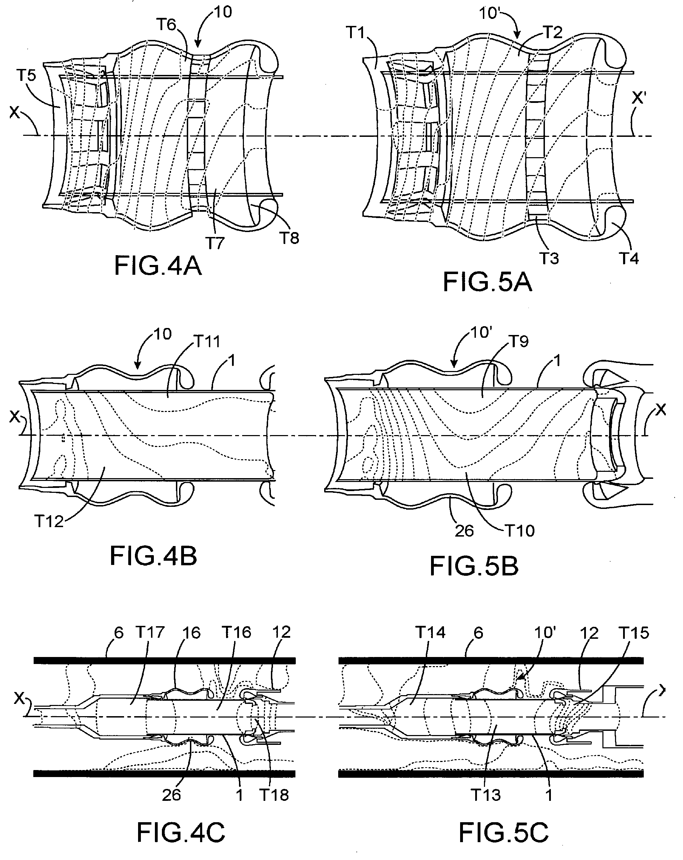

Les figures 4A et 4B représentent une carte des températures au sein d'un capot pare-effluves selon la présente invention et au sein du conducteur 2 d'un appareillage électrique selon la présente invention respectivement. Sur la figure 4C, une carte de l'ensemble de l'appareillage électrique selon la présente invention est représentée.

A titre de comparaison uniquement, les cartes de températures ont été calculées dans le cas d'un capot-pare effluve 10' ne comportant pas d'orifice assurant les échanges convectifs.

Les calculs ont été faits avec le logiciel ANSYS en considérant un courant de 4000 A.

Sur les figures 4A à 4c et 5A à 5C sont délimités schématiquement les zones de températures. Nous indiquerons certaines de ces températures calculées.

Sur la figure 4A, la température du capot est comprise entre T8 qui est sensiblement égale à 78°C et T5 qui est sensiblement égale à 85°C. Au niveau de la dépression munie d'ouvertures, la température est comprise entre T7 = 79°C et T6 = 81°C. Dans le cas du capot de la figure 5A, la température du capot est comprise entre T4 qui est sensiblement égale à 81°C et T1 qui est sensiblement égale à 85°C. Au niveau de la dépression, la température est comprise entre T3 = 82°C et T2 = 84°C. On constate donc l'effet des orifices sur la température du capot.

L'effet de la présence des orifices est encore plus remarquable en comparant les cartes des conducteurs des figures 4B et 5B. Dans un conducteur situé dans un capot selon l'invention représenté sur la figure 4B, la température du conducteur, au niveau de la dépression munie d'ouvertures, est comprise entre T12 qui est sensiblement égal à 90°C et T11 qui est sensiblement égale à 92°C. Dans un conducteur représenté sur la figure 5B, la température du conducteur au niveau de la dépression, est comprise entre T10 qui est sensiblement égal à 96°C et T9 qui est sensiblement égale à 98°C.

Sur les figures 4C et 5C, de manière similaire on peut voir la carte de température d'un exemple d'appareillage électrique en entier selon l'invention dans lequel la température au sein du conducteur est bien inférieure à celle dans le conducteur d'un appareillage électrique dans lequel le capot ne comporte pas d'orifice. Sur la figure 4C, la température est comprise entre T17, T18 qui sont sensiblement égales à 87°C et T16 qui est sensiblement égale à 90°C au niveau de la dépression munie d'ouvertures. Sur la figure 5C, la température, au niveau de la dépression est comprise entre T14, T15 qui sont sensiblement égales 89° et T13 = 95°C.

Ces mesures de température sont à rapprocher des valeurs de gradient de tension au niveau des orifices.

Sur la figure 3B sont symbolisées par des flèches les valeurs de gradient de tension sur la surface des bords d'un orifice 26 situé dans le fond d'une dépression 22. Sur la figure 3A est représentée en détail les formes de la dépression et de l'orifice considérés pour effectuer les calculs.

Nous rappelons que le gradient de tension est égal au rapport de la différence de tension entre deux lignes équipotentielles et de la distance entre ces deux lignes.

La valeur maximale du gradient de tension sur les bords de l'orifice est de 18,2344 V/m.

A titre de comparaison dans le cas où l'orifice ne serait pas dans une dépression, le capot présentant une forme cylindrique de révolution, la valeur maximale du gradient de tension sur les bords de l'orifice serait de 40,2548 V/m.

Par conséquent, le gradient de tension est divisé par deux grâce à la présente invention, cet abaissement du gradient réduit donc les risques d'amorçage dus à la présence des orifices 26.

Nous allons maintenant décrire le fonctionnement des orifices 26.

Le conducteur 1 est entouré par le capot pare-effluves 10 l'ensemble étant entouré par un fluide diélectrique. Le capot pare-effluves a pour fonction de recouvrir les zones susceptibles de concentrer les contraintes diélectriques et de provoquer une augmentation du gradient de champ électrique dans cette zone. Or le capot pare-effluve a pour effet de confiner le fluide autour du conducteur. Un courant électrique circulant dans ce conducteur 1, un dégagement de chaleur a lieu. Du fait du confinement, le gaz est échauffé. Par ailleurs, les fluide entourant le capot est en contact avec la paroi de la cuve, qui est elle-même en contact avec l'air ambiant, le fluide est alors à une température inférieure à celle du fluide entre le conducteur et le capot. Grâce à la présence des orifices 26, une communication entre l'intérieur et l'extérieur du capot est créée. Du fait de la différence de température entre les deux zones, le fluide est mis en mouvement par convection. Cette circulation de fluide est maintenue, puisque le conducteur continue à dégager de la chaleur. Cette circulation de fluide provoque donc une extraction de la chaleur à l'intérieur du capot, et donc un refroidissement du conducteur.

Grâce à aux échanges convectifs à travers le capot pare-effluves selon l'invention, on obtient un échauffement réduit à l'intérieur des capots, en particulier dans les conducteurs et des contraintes diélectriques limitées au niveau des ces orifices grâce à la disposition des orifices de convection au fond de dépressions.

Le capot pare-effluves selon la présente invention peut comporter plusieurs zones de dépression annulaires, toutes pouvant comporter des orifices convectifs ou seulement une partie d'entre elles.

Dans l'exemple représenté sur les figures 2A et 2B, la dépression est située axialement entre deux bossages annulaires, mais cette réalisation n'est en aucun cas limitative, le capot 510 représenté sur la figure 10 entre également dans le cadre de la présente invention. Dans cet exemple, le capot comporte deux sections de tube 530 de section circulaire de part et d'autre d'une portion de dépression annulaire 522. Cette réalisation présente l'avantage d'être très simple.

L'exemple de réalisation par exemple des figures 2A et 2B présente l'avantage de limiter le diamètre de l'extrémité distale du capot. En effet, le diamètre intérieur de la dépression est sensiblement égal à celui de la partie distale du capot, tandis que sur la figure 10, il faut prévoir une extrémité de la partie distale de diamètre plus grand pour pouvoir loger la dépression entre le diamètre extérieur du capot et le conducteur.

En variante et comme cela est représentée sur la figure 11, on peut prévoir que la dépression soit faite par usinage dans l'épaisseur du corps.

A titre d'exemple uniquement, dans l'exemple des figures 6A et 6B pour 4000 A un dimensionnement de la section de passage à 40 x 5 mm² a été proposé

Les capots selon la présente invention sont réalisés par exemple par formage, par usinage....

## Revendications

1. Appareillage électrique sous enceinte métallique remplie de gaz diélectrique sous pression, comportant au moins un conducteur électrique (1) d'axe longitudinal (X) destiné à être sous tension, disposé à l'intérieur de l'enceinte (6), au moins un capot pare-effluve (10, 110, 210, 310, 410, 510) entourant au moins une portion longitudinale dudit conducteur (1), **caractérisé en ce que** ledit capot pare-effluve (10, 110, 210, 310, 410, 510) comporte un corps (14) conducteur électrique creux d'axe longitudinal sensiblement coaxial à l'axe de l'enceinte (6), ledit corps (14) comportant au moins une dépression annulaire (22) dans sa surface extérieure et au moins un orifice (26, 126, 226, 326, 426, 526) traversant ledit corps (14) pour assurer la circulation du gaz diélectrique entre une zone intérieure et une zone extérieure au capot pare-effluve (10, 110, 210, 310, 410, 510), ledit orifice étant réalisé dans un fond de ladite dépression annulaire.

2. Appareillage électrique selon la revendication 1, comportant une pluralité d'orifices (26, 126, 226, 326, 426, 526) dans ledit fond de la dépression annulaire répartie autour de l'axe longitudinal (X).

3. Appareillage électrique selon la revendication précédente comportant trois orifices ou trois groupes d'orifices (26, 126, 226, 326, 426, 526) disposés à 120° l'un de l'autre autour de l'axe longitudinal (X).

4. Appareillage électrique selon la revendication 3, dans lequel le conducteur (1) est sensiblement horizontal et dans lequel un orifice ou un groupe d'orifices (26, 126, 226, 326, 426, 526) est disposé dans une partie inférieure du capot pare-effluve (10, 110, 210, 310, 410, 510) et deux orifices ou deux groupes d'orifices (26, 126, 226, 326, 426, 526) sont disposés dans une partie supérieure du capot pare-effluve (10, 110, 210, 310, 410, 510), avantageusement les deux orifices ou groupes d'orifices (26, 126, 226, 326, 426, 526) de la partie supérieure sont disposés symétriquement par rapport à un plan vertical contenant l'axe longitudinal (X).

5. Appareillage électrique selon l'une des revendications 1 à 4, dans lequel la dépression annulaire (22) présente un rayon de courbure (R2).

6. Appareillage électrique selon l'une des revendications 1 à 5, dans lequel le capot pare-effluve comporte une extrémité libre munie d'un bourrelet annulaire (V) entourant le conducteur (1).

7. Appareillage électrique selon l'une des revendications 1 à 6, dans lequel le capot pare-effluve (10, 110, 210, 310, 410, 510) comporte deux bossages annulaires (20, 24) présentant chacun un rayon de courbure (R1, R2), disposés axialement de part et d'autre de la dépression annulaire (22), les flancs de la dépression annulaire (22) étant formés pour l'un par un flanc d'un desdits bossage (20) et pour l'autre par le flanc de l'autre desdits bossage (24).

8. Appareillage électrique selon la revendication 6 et 7, dans lequel le corps (14) du capot pare-effluve présente une épaisseur sensiblement constante sauf au niveau de son extrémité libre.

9. Appareillage électrique selon la revendication 7 ou 8, dans lequel les rayons de courbure des premier et deuxième bossages (20 ,24) sont sensiblement égaux, la distance minimale entre le capot pare-effluve et l'enveloppe (6) étant définie par le diamètre extérieur des bossages.

10. Appareillage électrique selon la revendication 9, dans lequel le deuxième bossage (24) et l'extrémité libre du capot forment un profil continu.

11. Appareillage électrique selon l'une des revendications 1 à 10, dans lequel les bords (226.1, 426.1) des orifices (226, 426) présentent un profil convexe.

12. Appareillage électrique selon l'une des revendications 1 à 11, dans lequel le corps (14) du capot pare-effluve a une section transversale circulaire.

13. Appareillage électrique selon l'une des revendications 1 à 12, dans lequel les orifices (326, 426) ont une section de passage circulaire.

14. Appareillage électrique selon l'une des revendications 1 à 13, dans lequel le conducteur électrique comporte deux éléments de contact (2, 4), au moins l'un des éléments de contact (2) étant mobile le long d'un axe longitudinal (X), lesdits éléments de contact (2, 4) étant destinés à venir en contact, ledit capot pare-effluve (10) entourant au moins partiellement ledit au moins un élément de contact mobile (2), et ledit poste comportant un deuxième capot pare-effluve (12) entourant au moins partiellement le deuxième élément de contact (4).

## Patentansprüche

1. Elektrische Vorrichtung in einem Metallgehäuse, die mit unter Druck stehendem, dielektrischen Gas gefüllt ist, enthaltend zumindest einen elektrischen Leiter (1) mit einer Längsachse (X), der dazu bestimmt ist, unter Spannung zu stehen und innerhalb des Mantels (6) angeordnet ist, zumindest eine Abschirmhaube (10, 110, 210, 310, 410, 510), die zumindest einen Längsabschnitt des Leiters (1) umgibt, dadurch gekerinzeichnet, dass die Abschirmhaube (10, 110, 210, 310, 410, 510) einen hohl ausgeführten, elektrisch leitfähigen Körper (14) mit einer Längsachse aufweist, die im Wesentlichen koaxial zur Achse des Mantels (6) verläuft, wobei der Körper (14) zumindest eine ringförmige Vertiefung (22) in seiner Außenfläche und zumindest eine Öffnung (26, 126, 226, 326, 426, 526) aufweist, die sich durch den Körper (14) hindurch erstreckt, um die Zirkulation des dielektrischen Gases zwischen einem Innenbereich und einem Außenbereich der Abschirmhaube (10, 110, 210, 310, 410, 510) sicherzustellen, wobei die Öffnung in einem Boden der ringförmigen Vertiefung ausgeführt ist.

2. Elektrische Vorrichtung nach Anspruch 1, enthaltend eine Mehrzahl von Öffnungen (26, 126, 226, 326, 426, 526) in dem Boden der ringförmigen Vertiefung, die um die Längsachse (X) herum verteilt sind.

3. Elektrische Vorrichtung nach dem vorangehenden Anspruch, enthaltend drei Öffnungen bzw. drei Gruppen von Öffnungen (26, 126, 226, 326, 426, 526), die um 120° voneinander um die Längsachse (X) herum angeordnet sind.

4. Elektrische Vorrichtung nach Anspruch 3, wobei der Leiter (1) im Wesentlichen horizontal verläuft und wobei eine Öffnung bzw. eine Gruppe von Öffnungen (26, 126, 226, 326, 426, 526) in einem unteren Bereich der Abschirmhaube (10, 110, 210, 310, 410, 510) angeordnet ist und zwei Öffnungen bzw. zwei Gruppen von Öffnungen (26, 126, 226, 326, 426, 526) in einem oberen Bereich der Abschirmhaube (10, 110, 210, 310, 410, 510) angeordnet sind, wobei vorzugsweise die beiden Öffnungen bzw. Gruppen von Öffnungen (26, 126, 226, 326, 426, 526) des oberen Bereichs symmetrisch bezüglich einer die Längsachse (X) enthaltenden senkrechten Ebene angeordnet sind.

5. Elektrische Vorrichtung nach einem der Ansprüche 1 bis 4, wobei die ringförmige Vertiefung (22) einen Krümmungsradius (R2) aufweist.

6. Elektrische Vorrichtung nach einem der Ansprüche 1 bis 5, wobei die Abschirmhaube ein freies Ende aufweist, das mit einer Ringwulst (V) versehen ist, welche den Leiter (1) umgibt.

7. Elektrische Vorrichtung nach einem der Ansprüche 1 bis 6, wobei die Abschirmhaube (10, 110, 210, 310, 410, 510) zwei ringförmige Erhebungen (20, 24) aufweist, die jeweils einen Krümmungsradius (R1, R2) aufweisen und axial beiderseits der ringförmigen Vertiefung (22) angeordnet sind, wobei die Flanken der ringförmigen Vertiefung (22) zum einen von einer Flanke einer der Erhebungen (20) und zum anderen von der Flanke der anderen Erhebung (24) gebildet werden.

8. Elektrische Vorrichtung nach Anspruch 6 und 7, wobei der Körper (14) der Abschirmhaube eine im Wesentlichen konstante Dicke aufweist, ausgenommen im Bereich seines freien Endes.

9. Elektrische Vorrichtung nach Anspruch 7 oder 8, wobei die Krümmungsradien der ersten und der zweiten Erhebung (20, 24) im Wesentlichen gleich sind, wobei der Mindestabstand zwischen der Abschirmhaube und dem Mantel (6) von dem Außendurchmesser der Erhebungen definiert wird.

10. Elektrische Vorrichtung nach Anspruch 9, wobei die zweite Erhebung (24) und das freie Ende der Haube ein kontinuierliches Profil bilden.

11. Elektrische Vorrichtung nach einem der Ansprüche 1 bis 10, wobei die Ränder (226.1, 426.1) der Öffnungen (226, 426) ein konvex verlaufendes Profil haben.

12. Elektrische Vorrichtung nach einem der Ansprüche 1 bis 11, wobei der Körper (14) der Abschirmhaube einen kreisförmigen Querschnitt hat.

13. Elektrische Vorrichtung nach einem der Ansprüche 1 bis 12, wobei die Öffnungen (326, 426) einen kreisförmigen Durchlassquerschnitt haben.

14. Elektrische Vorrichtung nach einem der Ansprüche 1 bis 13, wobei der elektrische Leiter zwei Kontaktelemente (2, 4) aufweist, wobei zumindest eines der Kontaktelemente (2) entlang einer Längsachse (X) beweglich ist, wobei die Kontaktelemente (2, 4) dazu bestimmt sind, in Kontakt zu gelangen, wobei die Abschirmhaube (10) zumindest teilweise das zumindest eine bewegliche Kontaktelement (2) umgibt und wobei die Anlage eine zweite Abschirmhaube (12) aufweist, die zumindest teilweise das zweite Kontaktelement (4) umgibt.

## Claims

1. A gas-insulated electrical apparatus having an enclosure filled with dielectric gas under pressure, comprising at least one electrical conductor (1) designed to be live that is of longitudinal axis (X) and placed inside the enclosure (6), and at least one Corona-shield cap (10, 110, 210, 310, 410, 510) surrounding at least one longitudinal fraction of said conductor (1), **characterized in that** said Corona-shield cap (10, 110, 210, 310, 410, 510) comprises a hollow electrically conductive body (14) of longitudinal axis that is substantially coaxial with the axis of the enclosure (6), said body (14) comprising at least one annular depression (22) in its outer surface and at least one orifice (26, 126, 226, 326, 426, 526) passing through said body (14) in order to ensure that the dielectric gas flows between an inside zone and a zone that is outside the Corona-shield cap (10, 110, 210, 310, 410, 510), said orifice being made in a bottom of said annular depression.

2. Electrical apparatus according to claim 1, comprising a plurality of orifices (26, 126, 226, 326, 426, 526) in said bottom of the annular depression, distributed about the longitudinal axis (X).

3. Electrical apparatus according to the preceding claim comprising three orifices or three groups of orifices (26, 126, 226, 326, 426, 526) disposed at 120° from one another about the longitudinal axis (X).

4. Electrical apparatus according to claim 3, wherein the conductor (1) is substantially horizontal and an orifice or a group of orifices (26, 126, 226, 326, 426, 526) is disposed in a bottom portion of the Corona-shield cap (10, 110, 210, 310, 410, 510) and two orifices or two groups of orifices (26, 126, 226, 326, 426, 526) are disposed in a top portion of the Corona-shield cap (10, 110, 210, 310, 410, 510), advantageously the two orifices or groups of orifices (26, 126, 226, 326, 426, 526) of the top portion are disposed symmetrically relative to a vertical plane containing the longitudinal axis (X).

5. Electrical apparatus according to any one of claims 1 to 4, wherein the annular depression (22) presents a radius of curvature (R2).

6. Electrical apparatus according to any one of claims 1 to 5, wherein the Corona-shield cap comprises a free end provided with an annular flange (V) surrounding the conductor (1).

7. Electrical apparatus according to any one of claims 1 to 6, wherein the Corona-shield cap (10, 110, 210, 310, 410, 510) comprises two annular bosses (20, 24), each presenting a radius of curvature (R1, R2), disposed axially on either side of the annular depression (22), the sides of the annular depression (22) being formed for one by the side of said bosses (20) and for the other by the side of the other of said bosses (24).

8. Electrical apparatus according to claim 6 and claim 7, wherein the body (14) of the Corona-shield cap presents a thickness that is substantially constant except at its free end.

9. Electrical apparatus according to claim 7 or claim 8, wherein the radii of curvature of the first and second bosses (20 24) are substantially equal, the minimum distance between the Corona-shield cap and the enclosure (6) being defined by the outside diameter of the bosses.

10. Electrical apparatus according to claim 9, wherein the second boss (24) and the free end of the cap form a continuous profile.

11. Electrical apparatus according to any one of claims 1 to 10, wherein the edges (226.1, 426.1) of the orifices (226, 426) present a convex profile.

12. Electrical apparatus according to any one of claims 1 to 11, wherein the body (14) of the Corona-shield cap has a cross-section that is circular.

13. Electrical apparatus according to any one of claims 1 to 12, wherein the orifices (326, 426) have a flow section that is circular.

14. Electrical apparatus according to any one of claims 1 to 13, wherein the electrical conductor comprises two contact elements (2, 4), at least one of the contact elements being movable along a longitudinal axis (X), said contact elements (2, 4) being designed to come into contact, said Corona-shield cap (10) surrounding said at least one movable contact element (2) at least in part, and said electrical apparatus comprising a second Corona-shield cap (12) surrounding the second contact element (4) at least in part.
